# EUROPÄISCHE PATENTANMELDUNG

(11) **EP 4 851 026 A1**
(43) Veröffentlichungstag der Anmeldung: **09.12.2026**
(21) Anmeldenummer: 26177887.2
(22) Anmeldetag: 11.05.2026
(51) Int. Cl.: B62D 61/00, B25J 5/00

(54) **ROBOTERFAHRZEUG UND TRANSPORTEINHEIT MIT EINEM ROBOTERFAHRZEUG**

(30) Priorität: 03.06.2025 DE 102025121530
(71) Anmelder: Robert Bosch GmbH, 70442 Stuttgart (DE)
(72) Erfinder: Woelke, Florian, 70839 Gerlingen (DE); Holz, Rainer, 71672 Marbach (DE)

(57) **Zusammenfassung**

Die Erfindung betrifft ein Roboterfahrzeug (10) für eine automatisierte Fertigungsanlage, mit einem Fahrmodul (12), das eine Karosserie (14) zur Aufnahme zumindest einer Antriebseinheit (18), einer Sensoreinheit (22) und einer Steuerungseinheit (20) aufweist, wobei die Karosserie (14) dazu ausgebildet ist, an ihrer Oberseite (50) mit unterschiedlichen Funktionseinheiten (WST1, WST2) verbunden zu werden.

## Beschreibung

### Technisches Gebiet

Die Erfindung betrifft ein Roboterfahrzeug für eine automatisierte Fertigungsanlage, das sich insbesondere dadurch auszeichnet, dass auf der Oberseite des Roboterfahrzeugs angeordnete Funktionseinheiten von der Unterseite des Roboterfahrzeugs her zugänglich sind. Ferner betrifft die Erfindung eine Transporteinheit für eine automatisierte Fertigungsanlage mit einem erfindungsgemäß ausgebildeten Roboterfahrzeug.

### Stand der Technik

Aus der DE 10 2016 216 210 A1 der Anmelderin ist ein Roboterfahrzeug für eine automatisierte Fertigungsanlage mit den Merkmalen des Oberbegriffs des Anspruchs 1 bekannt. Das bekannte Roboterfahrzeug weist ein Fahrmodul auf, das der Aufnahme beispielsweise von Antriebseinheiten, Sensoreinheiten sowie einer Steuerungseinheit dient. Das Fahrmodul ist an seiner Oberseite mit unterschiedlichen Funktionseinheiten verbindbar, wobei die Funktionseinheiten als Handhabungsmodule ausgebildet sind, d.h. beispielsweise Greifeinrichtungen zum Handhaben von Werkstücken oder dgl. aufweisen.

### Offenbarung der Erfindung

Das erfindungsgemäße Roboterfahrzeug für eine automatisierte Fertigungsanlage mit den Merkmalen des Anspruchs 1 hat den Vorteil, dass es insbesondere im Zusammenhang mit Roboterfahrzeugen, die der Aufnahme bzw. dem Transport von Werkstückträgern dient, eine Zugänglichkeit der Werkstückträger bzw. der Funktionseinheiten von der Unterseite des Roboterfahrzeugs ermöglicht, und zwar auch dann, wenn der Werkstückträger das Roboterfahrzeug seitlich nicht überragt.

Der Erfindung liegt die Idee zugrunde, durch wenigstens eine Durchgangsöffnung, vorzugsweise mehrere Durchgangsöffnungen, die im Bereich der Karosserie des Fahrmoduls ausgebildet sind, eine Zugänglichkeit des Werkstückträgers oder auf dem Werkstückträger befindlicher Werkstücke zu ermöglichen. Damit ist es beispielsweise möglich, mittels entsprechender Manipulations- bzw. Handhabungseinheiten der Fertigungsanlage die entsprechenden Werkstücke zu erfassen, entweder optisch oder aber mechanisch, oder aber an der Unterseite des Werkstückträgers befindliche Informationen auslesen zu können, oder aber entsprechende Informationen an dem Werkstückträger anzubringen.

Vor dem Hintergrund der obigen Erläuterungen weist daher ein erfindungsgemäßes Roboterfahrzeug für eine automatisierte Fertigungsanlage mit den Merkmalen des Anspruchs 1 ein Fahrmodul mit einer Karosserie zur Aufnahme zumindest jeweils einer Antriebseinheit, einer Sensoreinheit sowie einer Steuerungseinheit auf. Die Karosserie ist weiterhin dazu ausgebildet, an ihrer (einer Fahrbahn der Fertigungsanlage abgewandten) Oberseite mit unterschiedlichen Funktionseinheiten verbunden zu werden. Das erfindungsgemäße Roboterfahrzeug zeichnet sich dadurch aus, dass die Karosserie wenigstens eine Durchgangsöffnung aufweist, die von der Unterseite der Karosserie bis zur Oberseite reicht und dazu ausgebildet ist, eine Zugänglichkeit eines Teilbereichs der auf der Oberseite angeordneten Funktionseinheit zu ermöglichen.

Vorteilhafte Weiterbildungen des erfindungsgemäßen Roboterfahrzeugs für eine automatisierte Fertigungsanlage sind in den Unteransprüchen aufgeführt.

Eine bevorzugte konstruktive Gestaltung des Roboterfahrzeugs sieht vor, dass die Karosserie im Wesentlichen quaderförmig ausgebildet ist mit einer Karosserielänge, einer Karosseriebreite und einer Karosseriehöhe, und/oder dass die Antriebseinheit zwei, jeweils separat ansteuerbare Antriebsmotoren aufweist, die mit jeweils einem Antriebsrad zusammenwirken, und/oder dass die Antriebsmotoren und die Antriebsräder in Richtung der Karosserielänge betrachtet in einem mittleren Bereich und auf der der äußeren Seite der Karosserie zugewandten Seite angeordnet sind, und/oder dass die wenigstens eine Durchgangsöffnung in dem mittleren Bereich zwischen den Antriebsmotoren ausgebildet ist, und/oder dass in einem Abstand zu den Antriebsrädern Stützräder zur Vermeidung von Kippbewegungen der Karosserie angeordnet sind. Ein soweit ausgebildetes Roboterfahrzeug weist eine Vielzahl von Vorteilen auf: Zum einen ist durch die Anordnung und Ausbildung der Antriebseinheit mit zwei, separat ansteuerbaren Antriebsmotoren in einem mittleren Bereich der Karosserielänge des Fahrzeugs eine besonders hohe Manövrierfähigkeit des Roboterfahrzeugs möglich. Insbesondere wird dadurch eine Drehung des Roboterfahrzeugs um seine Hochachse, d.h. ein Drehen des Roboterfahrzeugs ohne einen Wendekreis, ermöglicht. Dies erfolgt durch ein Antreiben der beiden Antriebsräder in unterschiedliche Drehrichtungen. Weiterhin wird durch die Anordnung der wenigstens einen Durchgangsöffnung zwischen den Antriebsmotoren auch die Ausbildung einer einen relativ großen Querschnitt aufweisenden Durchgangsöffnung ermöglicht. Die zusätzlich vorgesehenen Stützräder können hinsichtlich ihrer Größe relativ klein ausgebildet sein und schränken den zur Verfügung stehenden Innenraum der Karosserie insofern relativ wenig ein, als dass diese beispielsweise nicht oder kaum in den Innenraum der Karosserie hineinragen müssen.

In einer Weiterbildung des zuletzt gemachten konstruktiven Vorschlags ist es vorgesehen, dass zusätzliche Durchgangsbohrungen an Eckbereichen der Karosserie ausgebildet sind. Diese zusätzlichen Durchgangsbohrungen können beispielsweise beim Vorsehen von vier Stützrädern nahe der Stützräder ausgebildet sein.

Um zu vermeiden, dass über die wenigstens eine Durchgangsöffnung Staub oder die Funktionsfähigkeit des Roboterfahrzeugs gegebenenfalls negativ beeinflussende Medien, Partikel o.ä. in den Innenraum gelangen, weist eine bevorzugte Ausgestaltung der wenigstens einen Durchgangsöffnung das Merkmal auf, dass die wenigstens eine Durchgangsöffnung gegenüber einem Innenraum der Karosserie abgedichtet ausgebildet ist.

Die wenigstens eine Durchgangöffnung schränkt den zur Aufnahme von Bauteilen vorhandenen Bauraum innerhalb des Innenraumes des

Roboterfahrzeugs ein. Um trotzdem eine möglichst große Fläche bzw. Volumen des Innenraums in einer parallel zur Ober- bzw. Unterseite der Karosserie verlaufenden Ebene für die Aufnahme von elektronischen Bauelementen nützen zu können, kann es vorgesehen sein, dass innerhalb der Karosserie wenigstens ein in Form einer Leiterplatte ausgebildeter Schaltungsträger angeordnet ist, dessen Ebene parallel zur Ober- bzw. Unterseite der Karosserie verläuft, und dass die Leiterplatte zumindest im Bereich der wenigstens einen Durchgangsöffnung eine Aussparung aufweist.

Um bei möglichst kompakter Bauweise des Roboterfahrzeugs genügend Bauraum bzw. Möglichkeiten zur Anordnung von Leiterplatten zu ermöglichen, ist es in einer Weiterbildung des zuletzt gemachten Vorschlags vorgesehen, dass die wenigstens eine Leiterplatte mit wenigstens einer zusätzlichen Leiterplatte verbunden ist, deren Ebene senkrecht zur Ebene der wenigstens einen Leiterplatte verläuft.

Um unterschiedlichste Funktionseinheiten mit dem Roboterfahrzeug bzw. mit dessen Oberseite zu verbinden, ist es darüber hinaus in einer weiteren vorteilhaften Ausgestaltung vorgesehen, dass die Oberseite (des Roboterfahrzeugs) als ebene Oberseite ausgebildet ist, und dass im Bereich der Oberseite mechanische Kupplungsmittel zum lösbaren Verbinden der Karosserie mit einer Funktionseinheit angeordnet sind. Bei den mechanischen Kupplungsmitteln kann es sich beispielsweise im einfachsten Fall um senkrecht von der Oberseite der Karosserie abstehende Stifte handeln, die in gegengleiche Öffnungen der Funktionseinheit eingreifen. Weiterhin können zusätzliche Mittel vorhanden sein, die eine ungewollte Bewegung bzw. ein ungewolltes Anheben der Funktionseinheit von der Oberseite, beispielsweise bei einer Werkstückbearbeitung, vermeiden. Diese zusätzlichen Mittel können beispielsweise in Form von Magnetelementen o.ä. ausgebildet sein, die die Funktionseinheit mit dem Roboterfahrzeug verbinden.

Weiterhin umfasst die Erfindung auch eine Transporteinheit für eine automatisierte Fertigungsanlage mit einem soweit beschriebenen, erfindungsgemäß ausgebildeten Roboterfahrzeug und einer auf der Oberseite der Karossiere angeordneten Funktionseinheit. Bei der Funktionseinheit handelt es sich vorzugsweise um einen Werkstückträger. Dabei kann es vorgesehen sein, dass der Werkstückträger die Karosserie seitlich überragt, und dass optional Stützräder zur Vermeidung von Kippbewegungen an dem Werkstückträger vorgesehen sind.

Weitere Vorteile, Merkmale und Einzelheiten der Erfindung ergeben sich aus der nachfolgenden Beschreibung bevorzugter Ausführungsformen der Erfindung sowie anhand der Zeichnungen.

### Kurze Beschreibung der Zeichnungen

- Fig. 1: zeigt ein Roboterfahrzeug für eine automatisierte Fertigungsanlage in einer perspektivischen, transparenten Unteransicht mit einem ersten Werkstückträger,
- Fig. 2: das Roboterfahrzeug gemäß der Fig. 1 in einer weiteren perspektivischen Unteransicht mit einem zweiten Werkstückträger, der das Roboterfahrzeug seitlich überragt,
- Fig. 3: eine Draufsicht auf das Roboterfahrzeug gemäß der Fig. 1,
- Fig. 4: eine transparente, perspektivische Oberseite auf das Roboterfahrzeug gemäß der Fig. 1 bis 3 und

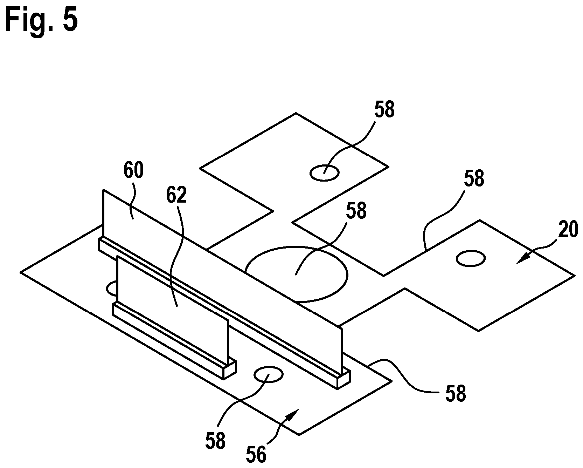

- Fig. 5: eine perspektivische Darstellung von miteinander verbundenen Leiterplatten für das Roboterfahrzeug.

### Ausführungsformen der Erfindung

Gleiche Elemente bzw. Elemente mit gleicher Funktion sind in den Figuren mit den gleichen Bezugsziffern versehen.

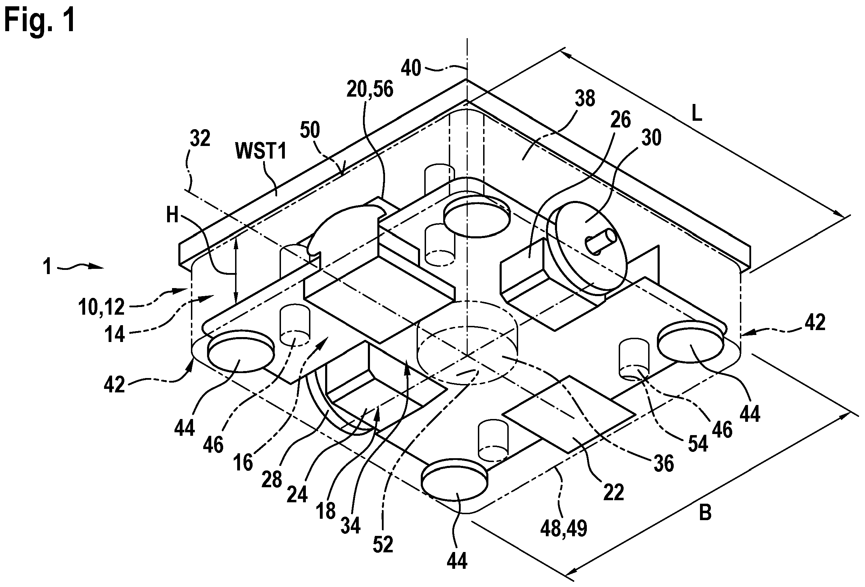

In der Fig. 1 ist eine Transporteinheit 1 mit einem Roboterfahrzeug 10 für eine in den Figuren nicht dargestellte, automatisierte Fertigungsanlage dargestellt. Das Rotoberfahrzeug 10 weist ein Fahrmodul 12 mit einer Karosserie 14 auf. Das Fahrmodul 12 bzw. die Karosserie 14 sind zumindest im Wesentlichen quaderförmig mit einer Fahrzeuglänge L, einer Fahrzeugbreite B und einer Fahrzeughöhe H ausgebildet. Beispielsweise beträgt die Fahrzeuglänge L sowie die Fahrzeugbreite B jeweils etwa 150mm, während die Fahrzeughöhe H 50mm oder weniger beträgt. Die Karosserie 14 ist darüber hinaus als mehrteilige Karosserie 14 ausgebildet und besteht beispielsweise zumindest teilweise aus Kunststoff- und/oder Metallbauteilen.

Die Karosserie 14 weist einen zumindest im Wesentlichen gegenüber dem Eintritt von Medien o.ä. geschlossenen Innenraum 16 auf. In dem Innenraum 16 sind entsprechend der Darstellung der Fig. 1, 2 und 4 beispielhaft und nicht einschränkend zumindest eine Antriebseinheit 18 eine Steuerungseinheit 20 sowie eine Sensoreinheit 22 angeordnet. Bei der Sensoreinheit 22 handelt es sich beispielsweise um eine Kameraeinheit, die dazu ausgebildet ist, auf einer Fahrbahnoberfläche der automatisierten Fertigungsanlage angeordnete Kennungen, Codierungen o.ä. zu erfassen, um diese der Steuerungseinheit 20 als Eingangssignale zuzuführen.

Die wenigstens eine Antriebseinheit 18 umfasst zwei, jeweils separat ansteuerbare Antriebsmotoren 24, 26 in Form von Elektromotoren, die mit jeweils einem Antriebsrad 28, 30 verbunden sind, um das Roboterfahrzeug 10 anzutreiben und zu manövrieren. Wesentlich ist, dass die Antriebsmotoren 24, 26 sowie die Räder 28, 30 an den seitlichen Randbereichen der Karosserie 14 auf gegenüberliegenden Seiten einer Längsachse 32 des Roboterfahrzeugs 10 angeordnet sind, sodass in einem Zwischenraum 34 zwischen den Antriebsmotoren 24, 26 dieser frei von Antriebsbauteilen ist, um in diesem Bereich eine erste Durchgangsöffnung 36 an der Karosserie 14 auszubilden. Wichtig ist auch, dass die beiden Antriebsmotoren 24, 26 bzw. die Räder 28, 30 in Richtung der Längsachse 32 bzw. der Fahrzeuglänge L betrachtet in einem mittleren Bereich der Karosserie 14 angeordnet sind. Die Räder 28, 30 sind vorzugsweise noch innerhalb der Karossiere 14 nahe einer äußeren Seitenwand 38 der Karosserie 14 angeordnet.

Die erste Durchgangsöffnung 36 ist beispielhaft als runde Durchgangsöffnung 36 ausgebildet und weist einen Durchmesser von beispielhaft 40mm auf. Weiterhin ist die erste Durchgangsöffnung 36 konzentrisch zu einer Hochachse 40 der Karosserie 14 angeordnet, wobei das Roboterfahrzeug 10 durch Antreiben der beiden Räder 28, 30 in unterschiedliche Drehrichtungen um die Hochachse 40 gedreht werden kann.

Um ein Kippen der Karosserie 14 aufgrund der lediglich zwei Räder 28, 30 zu vermeiden, weist die Karosserie 14 darüber hinaus beispielhaft an den vier Eckbereichen 42 jeweils Stützräder 44 auf, die Kugelrollen aufweisen. Beispielhaft sind die vier Stützräder 44 unmittelbar an den Eckbereichen 42 angeordnet und weisen lediglich eine geringe Bauhöhe innerhalb des Innenraums 16 auf. Zusätzlich sind in den Eckbereichen 42 der Karosserie 14 nahe der Stützräder 44 insgesamt vier weitere Durchgangsöffnungen 46 ausgebildet. Die weiteren Durchgangsöffnungen 46 sind ebenfalls im Querschnitt kreisförmig bzw. rund ausgebildet und weisen gegenüber der ersten Durchgangsöffnung 36 einen geringeren Durchmesser, beispielsweise einen Durchmesser von 12mm auf.

Die Durchgangsöffnungen 36 und 46 erstrecken sich von einer Unterseite 48 bzw. einem Boden 49 der Karossiere 14 bis zu einer Oberseite 50 der Karosserie 14. Um zu vermeiden, dass über die Durchgangsöffnungen 36, 46 Staub, Feuchtigkeit o.ä., die Funktionsfähigkeit des Roboterfahrzeugs 10 beeinflussende Medien in dem Innenraum 16 gelangen, sind die Durchgangsöffnungen 36, 46 von hülsenartigen Begrenzungswänden 52, 54 umgeben und gegenüber dem Innenraum 16 abgedichtet.

Die Steuerungseinheit 20 umfasst beispielshaft einen Schaltungsträger in Form einer Leiterplatte 56, deren Ebene parallel zur Unterseite 48 bzw. zur Oberseite 50 der Karosserie 14 verläuft. Im Bereich der Sensoreinheit 22, der Durchgangsöffnungen 36, 46 sowie der Antriebseinheiten 18 weist die Leiterplatte 56 Aussparungen 58 bzw. Öffnungen auf.

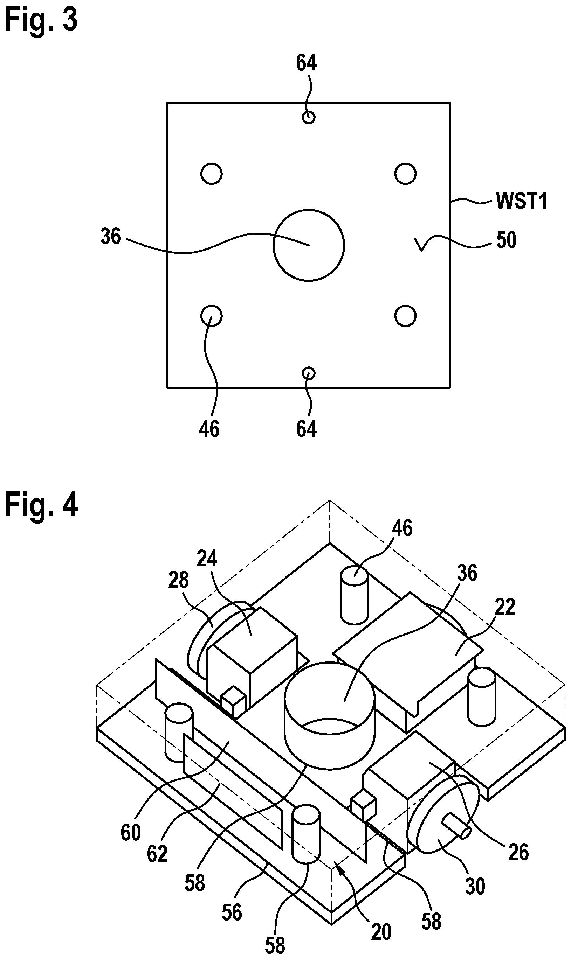

Um zusätzlichen Bauraum zur Anordnung von Bauteilen wie elektronischen Bauelementen o.ä., verursacht durch die Aussparungen 58 bereitzustellen, sind mit der Oberseite der Leiterplatte 56 zwei weitere Leiterplatten 60, 62 in Form von Steckleiterplatten verbunden, wobei deren Ebene jeweils senkrecht zur Ebene der Leiterplatte 56 verläuft (Fig. 4).

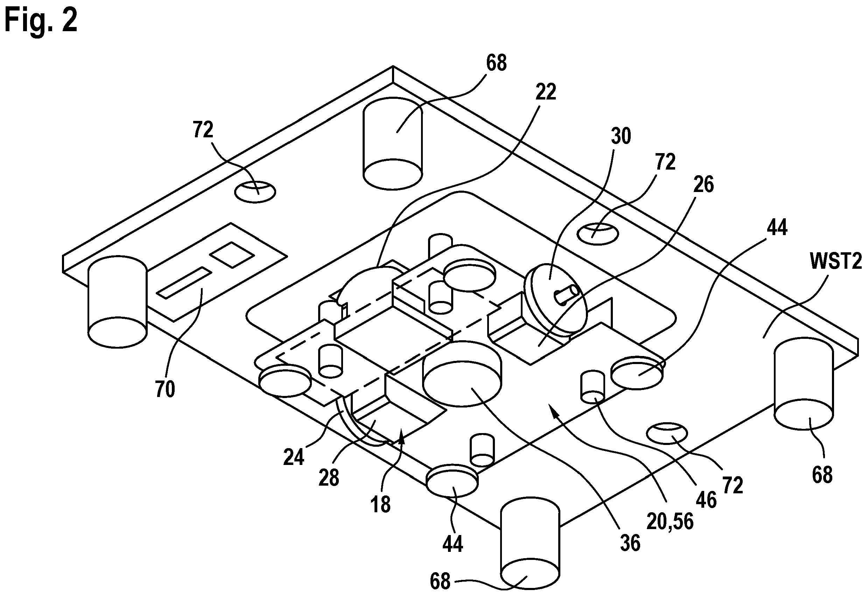

Anhand der Fig. 3 ist erkennbar, dass die Durchgangsöffnungen 36, 46 bis zur Oberseite 50 der Karosserie 14 reichen. Weiterhin erkennt man in der Fig. 3 an gegenüberliegenden Randbereichen jeweils einen von der Oberseite 50 der Karosserie 14 senkrecht abstehenden Befestigungs- und Zentrierstift 64, 66. Diese Befestigungs- und Zentrierstifte 64, 66 dienen dazu, in den Fig. 1 und 2 dargestellte, unterschiedliche Baugrößen aufweisende Werkstückträger WST1 und WST2 mit der ebenen Oberseite 50 der Karosserie 14 zu verbinden. Um eine zusätzliche Sicherung der Werkstückträger WST1 und WST2 zu ermöglichen, können darüber hinaus beispielsweise magnetische Haltemittel zwischen dem Roboterfahrzeug 10 und den Werkstückträgern WST1 und WST2 vorgesehen sein (nicht dargestellt).

Der in der Fig. 1 erkennbare Werkstückträger WST1 weist eine (quadratische) Grundfläche auf, die das Roboterfahrzeug 10 bzw. das Fahrmodul 12, wenn überhaupt, lediglich geringfügig seitlich überragt. Demgegenüber überragt der in der Fig. 2 verwendete Werkstückträger WST2 das Roboterfahrzeug 10 bzw. das Fahrmodul 12 sowohl in Richtung der Fahrzeuglänge L, als auch in Richtung der Fahrzeugbreite B betrachtet. Um bei letztgenanntem Werkstückträger WST2, insbesondere bei nicht mittig bzw. relativ schweren, auf dem Werkstückträger WST2 angeordneten Werkstücken eine Kippsicherung des Roboterfahrzeugs 10 zu ermöglichen, weist der Werkstückträger WST2 an seiner Unterseite beispielhaft an den vier Eckbereichen jeweils zusätzliche Stützräder 68 auf. Weiterhin erkennt man an der Unterseite des Werkstückträgers WST2 eine Kennung 70, z.B. in Form eines QR-Codes o.ä.. Weiterhin weist der Werkstückträger WST2 an seinen Längsrändern zusätzliche Durchgangsöffnungen 72 auf, über die beispielsweise auf der Oberseite des Werkstückträgers WST2 angeordnete Werkstücke erfassbar sind.

Das soweit beschriebene Roboterfahrzeug 10 kann in vielfältiger Art und Weise abgewandelt bzw. modifiziert werden, ohne vom Erfindungsgedanken abzuweichen.

## Patentansprüche

1. Roboterfahrzeug (10) für eine automatisierte Fertigungsanlage, mit einem Fahrmodul (12), das eine Karosserie (14) zur Aufnahme zumindest einer Antriebseinheit (18), einer Sensoreinheit (22) und einer Steuerungseinheit (20) aufweist, wobei die Karosserie (14) dazu ausgebildet ist, an ihrer Oberseite (50) mit unterschiedlichen Funktionseinheiten (WST1, WST2) verbunden zu werden,
**dadurch gekennzeichnet,**
**dass** die Karosserie (14) wenigstens eine Durchgangsöffnung 36, 46) aufweist, die von einer Unterseite (58) der Karosserie (14) bis zur Oberseite (50) reicht und dazu ausgebildet ist, eine Zugänglichkeit eines Teilbereichs der auf der Oberseite (50) angeordneten Funktionseinheit (WST1, WST2) zu ermöglichen.

2. Roboterfahrzeug nach Anspruch 1,
**dadurch gekennzeichnet,**
**dass** die Karosserie (14) im Wesentlichen quaderförmig ausgebildet ist mit einer Karosserielänge (L), einer Karosseriebreite (B) und einer Karosseriehöhe (H), und/oder
**dass** die zumindest eine Antriebseinheit (18) zwei, jeweils separat ansteuerbare Antriebsmotoren (24, 26) aufweist, die mit jeweils einem Antriebsrad (28, 30) zusammenwirken, und/oder
**dass** die Antriebsmotoren (24, 26) und die Antriebsräder (28, 30) in Richtung der Karosserielänge (L) betrachtet in einem mittleren Bereich und auf der der äußeren Seite der Karosserie (14) zugewandten Seite angeordnet sind, und/oder
**dass** die wenigstens eine Durchgangsöffnung (36) in dem mittleren Bereich zwischen den Antriebsmotoren (24, 26) ausgebildet ist, und/oder dass in einem Abstand zu den Antriebsrädern (28, 30) Stützräder (44) zur Vermeidung von Kippbewegungen der Karosserie (14) angeordnet sind.

3. Roboterfahrzeug nach Anspruch 2,
**dadurch gekennzeichnet,**
**dass** zusätzliche Durchgangsbohrungen (46) an Eckbereichen (42) der Karosserie (14) ausgebildet sind.

4. Roboterfahrzeug nach einem der Ansprüche 1 bis 3,
**dadurch gekennzeichnet,**
**dass** die Karosserie (14) einen Innenraum (16) aufweist, und dass die wenigstens eine Durchgangsöffnung (36, 46) gegenüber dem Innenraum (16) abgedichtet ausgebildet ist.

5. Roboterfahrzeug nach einem der Ansprüche 1 bis 4,
**dadurch gekennzeichnet,**
**dass** innerhalb der Karosserie (14) wenigstens ein in Form einer Leiterplatte (56) ausgebildeter Schaltungsträger angeordnet ist, dessen Ebene parallel zur Oberseite (50) der Karosserie (14) verläuft, und dass die Leiterplatte (56) zumindest im Bereich der wenigstens einen Durchgangsöffnung (36, 46) eine Aussparung (58) aufweist.

6. Roboterfahrzeug nach Anspruch 5,
**dadurch gekennzeichnet,**
**dass** die wenigstens eine Leiterplatte (56) mit wenigstens einer zusätzlichen Leiterplatte (60, 62) verbunden ist, deren Ebene senkrecht zur Ebene der wenigstens einen Leiterplatte (56) verläuft.

7. Roboterfahrzeug nach einem der Ansprüche 1 bis 6,
**dadurch gekennzeichnet,**
**dass** die Oberseite (50) der Karosserie (14) als ebene Oberseite (50) ausgebildet ist, und dass im Bereich der Oberseite (50) mechanische Kupplungsmittel (64, 66) zum lösbaren Verbinden der Karosserie (14) mit einer Funktionseinheit (WST1, WST2) angeordnet sind.

8. Transporteinheit (1) für eine automatisierte Fertigungsanlage mit einem Roboterfahrzeug (10), das nach einem der Ansprüche 1 bis 7 ausgebildet ist und einer auf der Oberseite (50) der Karosserie (14) angeordneten Funktionseinheit (WST1, WST2).

9. Transporteinheit nach Anspruch 8,
**dadurch gekennzeichnet,**
**dass** die Funktionseinheit (WST1, WST2) als Werkstückträger ausgebildet ist.

10. Transporteinheit nach Anspruch 9,
**dadurch gekennzeichnet,**
**dass** der Werkstückträger die Karosserie (14) seitlich überragt und optional Stützräder (68), insbesondere zusätzliche Stützräder (68), zur Vermeidung von Kippbewegungen des Roboterfahrzeugs (10) aufweist.
